# EUROPEAN PATENT SPECIFICATION

(11) **EP 2 314 039 B1**
(45) Date of publication and mention of the grant of the patent: **28.09.2016**
(21) Application number: 08787098.6
(22) Date of filing: 11.08.2008
(51) Int. Cl.: H04L 29/06

(54) **COMMUNICATION SYSTEM**
KOMMUNIKATIONSSYSTEM
SYSTÈME DE COMMUNICATION

(43) Date of publication of application: 27.04.2011
(73) Proprietor: Nokia Solutions and Networks Oy, 02610 Espoo (FI)
(72) Inventor: ZHANG, Shun, Liang, Beijing 100094 (CN); ZHANG, Yi, Beijing 100101 (CN); ZHOU, Wei, Hua, Beijing 100081 (CN)
(74) Representative: Borgström, Markus
(86) International application number: PCT/EP2008/060524
(87) International publication number: WO 2010/017832

(56) References cited:
- 3GPP ORG: "3GPP TS 23.203 v7.5.0.3rd Generation Partnership Project; Technical Specification Group Services and System Aspects; Policy and charging control architecture (Release 7)" INTERNET CITATION, 1 December 2007 (2007-12-01), XP002528291 [retrieved on 2007-12-01]
- "Digital cellular telecommunications system (Phase 2+); Universal Mobile Telecommunications System (UMTS); Policy and charging control architecture (3GPP TS 23.203 version 7.7.0 Release 7); ETSI TS 123 203" ETSI STANDARD, EUROPEAN TELECOMMUNICATIONS STANDARDS INSTITUTE (ETSI), SOPHIA ANTIPOLIS CEDEX, FRANCE, vol. 3-SA2, no. V7.7.0, 1 June 2008 (2008-06-01), XP014042062

## Description

### Field of invention

The present invention relates to the field of communication networks. Beyond this, the invention relates to communication methods. Moreover, the invention relates to a program element. Furthermore, the invention relates to a computer-readable medium.

### Art Background

WiMAX (Worldwide Interoperability for Microwave Access) can be considered as a telecommunications technology that provides wireless data in a variety of ways, from point-to-point links to full mobile cellular type access. WiMAX is based on the IEEE 802.16 standard. WiMAX may be denoted as a standards-based technology enabling the delivery of last mile wireless broadband access as an alternative to cable and DSL and also to High Speed Packet Access. 3GPP TS 23.203 v7.5.0 (2007/12), page 36, discloses IP-CAN Session Establishment.

However, a shortcoming of the WiMAX standard is that specific services are not support by WiMAX.

### Summary of the Invention

There may be a need for a communication system having a proper performance.

This need is met by a communication network, by a communication method, by a program element and by a computer-readable medium according to the independent claims. Further embodiments of the present invention are described by the dependent claims.

According to an exemplary embodiment, a communication network is provided, the communication network comprising an access service network (ASN) entity, a policy and charging rules (PCRF) entity, and an authentication, authorization and accounting (AAA) entity (which entities may be communicatively coupled in or for a network which provides a service such as a telecommunications service (for instance a broadband wireless access service) to one or more mobile stations or subscribers), wherein the access service network entity is adapted for providing capabilities (such as any capability related to a network-based service, particularly charging capabilities (for instance online or offline charging)) to the authentication, authorization and accounting entity (for instance by transmitting a corresponding communication message), wherein the authentication, authorization and accounting entity is adapted for deciding whether the capabilities are to be activated and for providing the decision to the access service network entity (for instance by transmitting a corresponding communication message), and wherein the access service network entity is adapted for providing the decision to the policy and charging rules entity (for instance by transmitting a corresponding communication message).

According to another exemplary embodiment, a method of communicating in a communication network is provided, the communication method comprising providing capabilities, particularly charging capabilities, from an access service network entity to an authentication, authorization and accounting entity, deciding, by the authentication, authorization and accounting entity, whether the capabilities are to be activated and providing the decision to the access service network entity, and providing the decision from the access service network entity to the policy and charging rules entity.

According to still another exemplary embodiment of the invention, a program element (for instance a software routine, in source code or in executable code) is provided, which, when being executed by a processor, is adapted to control or carry out at least a part of a communication method having the above mentioned features.

According to yet another exemplary embodiment of the invention, a computer-readable medium (for instance a CD, a USB stick, a floppy disk or a harddisk) is provided, in which a computer program is stored which, when being executed by a processor, is adapted to control or carry out at least a part of a communication method having the above mentioned features.

Data processing for communication purposes which may be performed according to embodiments of the invention can be realized by a computer program, that is by software, or by using one or more special electronic optimization circuits, that is in hardware, or in hybrid form, that is by means of software components and hardware components.

The term "communication network" may denote any network for wired or wireless communication between a plurality of nodes or entities. Such nodes or entities may also comprise mobile stations such as a mobile phone and may include one or more control entities. Part of the network may be one or more base stations communicatively coupled to one or more of such mobile stations.

The term "access service network entity" (ASN) may denote an entity which provides an access service to a network, such as a network provider. An Access Service Network may provide a set of network functions that may include network entry, radio resource management, multicast and broadcast control, accounting assistance, Quality of Service (QoS), etc.

The term "policy and charging rules entity" (PCRF) may denote a provider of a charging function which for instance may allow for online charging for services provided within the network. A Policy and Charging Rules Function (PCRF) may be a node designated for the determination of policy rules. For example, a set of policy rules can be activated to verify access permission, checking and debiting credit balance, etc., for instance in real-time. A PCRF entity may enforce these policy rules. The PCRF entity may also provide a Policy Decision Function (PDF).

The term "authentication, authorization and accounting entity" (AAA) may particularly denote an AAA system, that is to say a network service for recognizing users, managing rights and charging services. An AAA Server may hold a subscriber's QoS profile and associated policy rules per subscriber.

According to an exemplary embodiment of the invention, a simple, convenient and safe system of managing charging capabilities and exchanging corresponding communication messages between an ASN entity, a PCRF entity and an AAA entity may be provided. This allows to integrate also online charging capabilities in a network architecture even if this network architecture does intrinsically not provide such a service.

In the following, further exemplary embodiments of the communication network will be explained. However, these embodiments also apply to the communication method, to the program element and to the computer-readable medium.

The access service network entity may be adapted for providing online charging capabilities, offline charging capabilities, and/or flow-based capabilities. In other words, the access service network entity may have the capability of allowing to charge for services provided in the network online. Online Charging systems may be functions that interface with PCEF (Policy and Charging Enforcement Function) for the purpose of online credit control. Offline Charging systems may be functions that interface with PCEF for the purpose of offline charging information. The provision of other capabilities is possible as well.

The access service network entity may be adapted for providing charging capabilities for charging a service provided via the communication network. Such a service may be a telecommunication service, a gaming service, provided to operators of mobile stations such as mobile phones. For such telephone services, rates have to be charged which can, for instance, be deducted from a prepaid card, be added to an invoice supplied to a user, etc. It is also possible that such services are covered partially or entirely by a flat rate.

The access service network entity may be adapted for providing charging capabilities to a mobile station communicatively coupled to the communication network. Such a mobile station (MS) or mobile communication terminal may be a mobile phone, a PDA or any other mobile terminal such as a laptop which can use services provided by a network provider.

The access service network entity may be adapted for providing charging capabilities to the authentication, authorization and accounting entity by transmitting an accept request to the authentication, authorization and accounting entity during network entry. After a mobile station has entered a network, such an electronic message may be sent from the ASN entity to the AAA entity.

The authentication, authorization and accounting entity may be adapted for transmitting an accept response to the access service network entity upon deciding that the charging capabilities are to be activated. Thus, with a further electronic message, the accept request may be answered by the AAA entity for instance when the AAA entity has decided that the charging capabilities shall be made available.

The authentication, authorization and accounting entity may be adapted for deciding whether the charging capabilities are to be activated based on a profile of a subscriber. A subscriber operating a mobile station may be identified in the communication network with a set of subscriber-specific data, for instance also including information relevant for online charging, for example the existence and the value of an account (such as a prepaid card), etc.

Embodiments of the invention may also be applied in the context of a roaming system in which the charging of the services provided in the various coupled networks may be specifically of interest.

The access service network entity may be adapted for providing the decision to the policy and charging rules entity when transmitting an indication of establishment of a communication session to the policy and charging rules entity. Thus, the decision regarding charging capabilities and the indication of establishment of a communication session may be mentioned in one and the same electronic message.

The policy and charging rules entity may be adapted for defining a charging policy based on the taken decision. In other words, the PCRF may decide about the frame conditions based on which the charging capability is provided.

More generally, PCRF only needs to know whether online charging can be supported in ASN for this MS. That is, ASN only needs to notify PCRF this information. PCRF needs not to feedback its decision to ASN. Then, the activation of online charging in ASN only depends on the decision of AAA, but not the decision of PCRF. Then, in the response message from PCRF to ASN, there is no requirement to include the decision of PCRF. In an embodiment, it is only required that ASN provides the decision from AAA to PCRF. PCRF does not necessarily need to feedback its decision back to ASN. Then, there is only a need to add online charging capabilities to a CCR message from ASN to PCRF, but there is no requirement for a CCA message from PCRF to ASN. That is, the motivation is to let PCRF know the online charging capabilities in ASN for this MS, whether PCRF uses online charging is PCRF specific.

Optionally, the policy and charging rules entity may be adapted for transmitting an acknowledgement of establishing a session to the access service network entity. By taking this measure, also the ASN entity may be informed in due time regarding the granted charging capabilities. However, PCRF needs not to feedback its decision to ASN.

The communication network may be adapted to be operable according to the IEEE 802.16 standard. The 802.16 family of standards may be called WirelessMAN, and may particularly cover WiMAX. It may particularly used as a standard for point to multi-point broadband wireless transmission in a 10 GHz to 66 GHz band, with a line of sight (LOS) capability. It may use a single carrier physical standard.

The communication network may be a Worldwide Interoperability for Microwave Access network (WiMAX), may be a 3GPP Long Term Evolution (LTE) network, or may also be applied to any other appropriate network scheme. Thus, embodiments of the invention apply to the WiMAX standard as a part of WiMAX PCC. However, more generally, embodiments of the invention can be implemented also for LTE or other networks.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered to be disclosed within this application.

The aspects and exemplary embodiments defined above and further aspects of the invention are apparent from the example of embodiment to be described hereinafter and are explained with reference to these examples of embodiment.

### Brief Description of the Drawings

Fig. 1 is a scheme illustrating a communication system according to an exemplary embodiment of the invention.
Fig. 2 illustrates a WiMAX network according to an exemplary embodiment of the invention having implemented an online charging management system.

### Detailed Description

The illustration in the drawings is schematic. It is noted that in different figures, similar or identical elements are provided with the similar or identical reference signs.

According to an exemplary embodiment of the invention, an online charging capabilities exchange between ASN (Access Service Network) and PCRF (Policy and Charging Rules Function) may be provided.

A WiMAX Policy and Charging Control (PCC) framework allows applications like IMS (Internet Multimedia Subsystem) to dynamically request Quality of Service (QoS) and charging attributes (which may also be called charging rule) for a specified IP flow from an access network where the framework verifies the authorization for the requested Quality of Service. Based on the service requirements, online charging might be desired for PCRF.

Within current WiMAX PCC specification, PCRF cannot know whether the ASN can support online charging. Then, the following scenario might happen: PCRF activates online charging for some mobile stations (MS) based on the service requirement of this subscriber. Later, PCRF may generate online charging rules for the service to this MS, and then transmit these online charging rules to ASN which cannot properly support online charging.

Before the standardization of WiMAX online charging, and during the standardization of WiMAX PCC, it was ignored that the ASN might not be able to support online charging capability. And even if the ASN can support online charging capability, it might not support it for some specific mobile stations, like the mobile station in roaming status.

A solution for this shortcoming will be described in the following in more detail and may be implemented into WiMAX standards.

According to an exemplary embodiment of the invention, the following sequence of procedural steps can be carried out:
1. ASN provides its charging capabilities to AAA during an AA process.
2. AAA only needs to decide whether online charging shall be activated for a specific mobile station (MS) depending on a subscriber's profile, and may return the decision to ASN.
3. If PCC (Policy and Charging Control) is active, ASN may provide the above decision from AAA to PCRF during initial interaction with PCRF. In this procedure, an online charging capability indicator of this mobile station is proposed to be added into an initial CCR message from ASN to PCRF during IP session setup to notify PCRF whether online charging is activated for this mobile station. This online charging capability indicator can be accounting capability AVP defined in WiMAX forum NWG (NWG WiMAX diameter) with online charging specific extension. Or a new AVP can also be defined for this purpose, like PCC-R3-OC capability AVP with TRUE (support online charging) or FALSE (not support online charging).
4. PCRF may decide whether it can activate online charging based on the online charging capability information from ASN in 3.

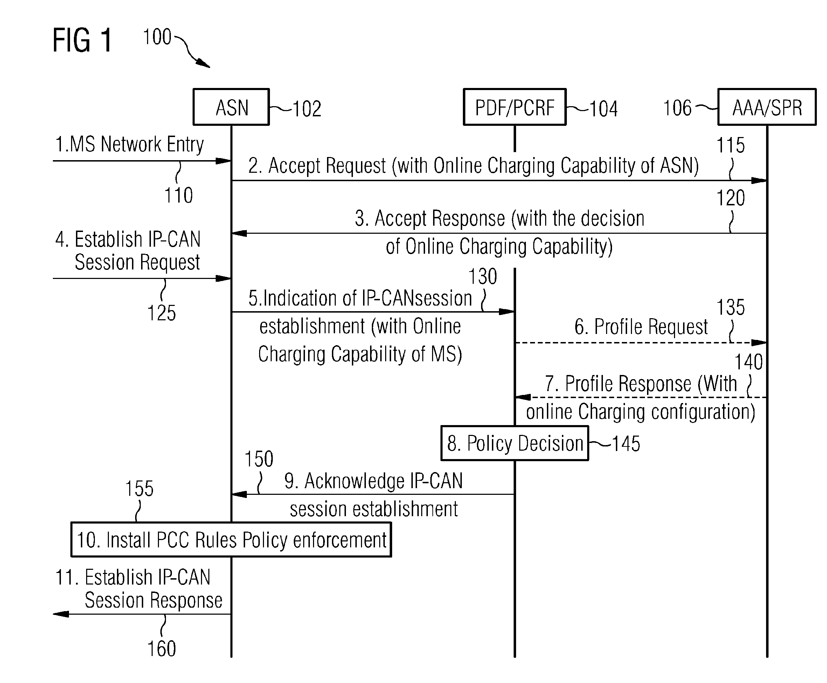

In the following, referring to Fig. 1, a specific implementation of such a communication architecture will be explained.

Fig. 1 illustrates a communication system 100 comprising an Access Service Network entity (ASN) 102, a Policy and Charging Rules Entity (PCRF) 104, and an Authentication, Authorization and Accounting entity (AAA) 106.

In a first step of a communication procedure, a mobile station enters a network, as indicated with reference numeral 110. This will be mentioned by the ASN 102. In a procedural step 115, the ASN 102 will send an accept request to the AAA (with online charging capability of ASN). Thus, the ASN 102 will provide its charging capabilities to the AAA entity 106.

The AAA entity 106 may send an accept response back to the ASN 102, as denoted with reference numeral 120. By such an accept response, the AAA entity 106 may decide whether the charging capabilities are to be activated, and this decision will be supplied to the ASN 102.

In steps 115, 120, during AAA procedure, the ASN entity 102 notifies the online charging capabilities to the AAA entity 106. Based on the subscriber's profile, the AAA entity 106 decides whether online charging shall be activated for this mobile station, and returns the decision to the ASN entity 102 in step 120.

An establish IP-CAN session request 125 may then be sent to the ASN entity 102. The ASN entity 102 may indicate IP-CAN session establishment (with online charging capability of mobile station) to the PCRF entity 104, as indicated with reference numeral 130. Thus, the ASN entity 102 will provide the decision to the PCRF entity 104.

In a step 135, a profile request may be sent from the PCRF 104 to the AAA entity 106. In response to the profile request 135, a profile response 140 may be sent from the AAA entity 106 to the PCRF entity 104 (with online charging configuration).

In a step 145, the PCRF entity 104 will decide about a policy regarding the handling of charging capabilities.

In a step 150, the PCRF entity 104 will send an acknowledgement to the ASN entity 102 acknowledging IP-CAN session establishment. In response to this message 150, compare reference numeral 155, the ASN entity 102 will install PCC rules and will enforce policy.

Furthermore, an establish IP-CAN session response 160 will be transmitted from the ASN entity 102 at the end of the online charging capability exchange procedure.

In steps 125, 130, 135, 140, 145, 150, 155 and 160, during IP session setup, the ASN unit 102 indicates PCRF IP session establishment by sending CCR (Credit Control Request) message in step 130. In this message, online charging capabilities of this mobile station is provided to notify the PCRF unit 104 whether the online charging capabilities of this mobile station are activated.

The PCRF unit 104 optionally can ask for a profile for this mobile station from SPR/AAA entity 106. Based on this information, in the step 140, if online charging is configured to be active for this mobile station, PCRF entity 104 will enable online charging for this mobile station. That means that PCRF can implement online charging rules for this mobile station if necessary.

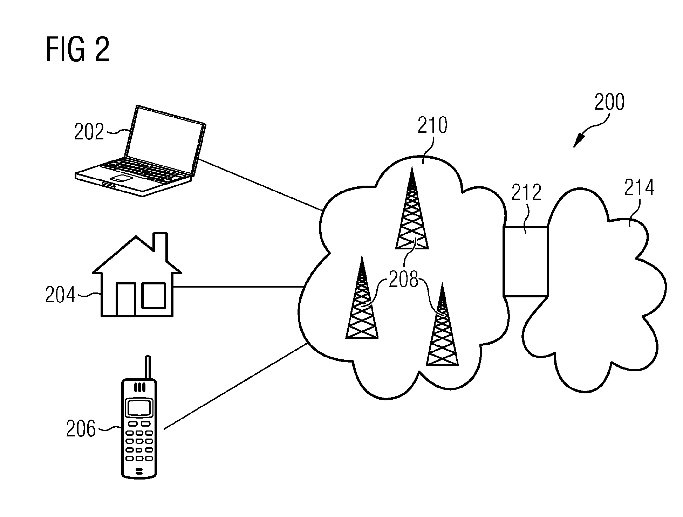

Fig. 2 schematically illustrates a communication network 200 according to an exemplary embodiment of the invention.

A first terminal 202, namely a laptop is shown in Fig. 2 as well as a home entity 204 and a mobile phone 206. These units 202, 204, 206 may communicate via one or more base stations 208 of a WiMAX network 210. Via a WiMAX hub 212, a communication with a further network 214 such as the public Internet is possible.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs and abbreviations:

- 100: communication network
- 102: access service network entity
- 104: policy and charging rules entity
- 106: authentication, authorization and accounting entity
- 110: entry procedure
- 115: accept request
- 120: accept response
- 125: establish session request
- 130: session establishment procedure
- 135: profile request
- 140: profile response
- 145: policy decision
- 150: acknowledge session establishment
- 155: policy enforcement
- 160: establish session response
- 200: communication network
- 202: terminal
- 204: home entity
- 206: mobile phone
- 208: base stations
- 210: WiMAX network
- 212: WiMAX hub
- 214: further network

## Claims

1. A communication network (100), the communication network (100) comprising
an access service network entity (102);
a policy and charging rules entity (104);
an authentication, authorization and accounting entity (106); wherein the access service network entity (102) is adapted for providing capabilities, particularly charging capabilities, to the authenticaton, authorization and accounting entity (106);
wherein the authentication, authorization and accounting entity (106) is adapted for deciding whether the capabilities are to be activated and for providing the decision to the access service network entity (102);
wherein the access service network entity (102) is adapted for providing the decision to the policy and charging rules entity (104).

2. The communication network (100) according to claim 1, wherein the access service network entity (102) is adapted for providing one of the group consisting of online charging capabilities, offline charging capabilities, and flow-based charging capabilities.

3. The communication network (100) according to claim 1 or 2, wherein the access service network entity (102) is adapted for providing charging capabilities for charging a service, particularly a telecommunication service or a roaming service, provided via the communication network (100).

4. The communication network (100) according to any one of claims 1 to 3,
wherein the access service network entity (102) is adapted for providing charging capabilities to a mobile station communicatively coupled to the communication network (100).

5. The communication network (100) according to any one of claims 1 to 4,
wherein the access service network entity (102) is adapted for providing charging capabilities to the authentication, authorization and accounting entity (106) by transmitting an accept request to the authentication, authorization and accounting entity (106) after entry of a mobile station in the communication network (100).

6. The communication network (100) according to claim 5,
wherein the authentication, authorization and accounting entity (106) is adapted for transmitting an accept response to the access service network entity (102) in response to the accept request upon deciding that the charging capabilities are to be activated.

7. The communication network (100) according to any one of claims 1 to 6,
wherein the authentication, authorization and accounting entity (106) is adapted for deciding whether the charging capabilities are to be activated based on a profile of a subscriber.

8. The communication network (100) according to any one of claims 1 to 7,
wherein the access service network entity (102) is adapted for providing the decision to the policy and charging rules entity (104) when transmitting an indication of establishment of a communication session to the policy and charging rules entity (104).

9. The communication network (100) according to any one of claims 1 to 8,
wherein the policy and charging rules entity (104) is adapted for defining a charging policy based on the decision.

10. The communication network (100) according to claim 9,
wherein the policy and charging rules entity (104) is adapted for transmitting an acknowledgement of establishing a session to the access service network entity (102).

11. The communication network (100) according to any one of claims 1 to 10,
adapted to be operable according to IEEE 802.16.

12. The communication network (100) according to any one of claims 1 to 11,
adapted as one of the group consisting of a Worldwide Interoperability for Microwave Access network, and a Long Term Evolution network.

13. A method of communicating in a communication network (100), the method comprising
providing capabilities ,particularly charging capabilities, from an access service network entity (102) to an authentication, authorization and accounting entity (106);
deciding, by the authentication, authorization and accounting entity (106), whether the capabilities are to be activated and providing the decision to the access service network entity (102);
providing the decision from the access service network entity (102) to the policy and charging rules entity (104).

14. A computer-readable medium, in which a computer program of communicating in a communication network (100) is stored, which computer program, when being executed by a processor, is adapted to carry out or control a method according to claim 13.

15. A program element of communicating in a communication network (100), which program element, when being executed by a processor, is adapted to carry out or control a method according to claim 13.

## Patentansprüche

1. Kommunikationsnetzwerk (100), das Kommunikationsnetzwerk (100) umfassend:
eine Zugangsdienstnetzwerk-Entität (102);
eine Entität für Richtlinien und Abrechnungsregeln (104);
eine Entität für Authentifizierung, Autorisierung und Buchführung (106);
wobei die Zugangsdienstnetzwerk-Entität (102) angepasst ist, der Entität für Authentifizierung, Autorisierung und Buchführung (106) Fähigkeiten, insbesondere Abrechnungsfähigkeiten, bereitzustellen;
wobei die Entität für Authentifizierung, Autorisierung und Buchführung (106) angepasst ist, zu entscheiden, ob die Fähigkeiten zu aktivieren sind, und die Entscheidung der Zugangsdienstnetzwerk-Entität (102) bereitzustellen;
wobei die Zugangsdienstnetzwerk-Entität (102) angepasst ist, die Entscheidung der Entität für Richtlinien und Abrechnungsregeln (104) bereitzustellen.

2. Kommunikationsnetzwerk (100) nach Anspruch 1,
wobei die Zugangsdienstnetzwerk-Entität (102) angepasst ist, eines der Gruppe, bestehend aus Online-Abrechnungsfähigkeiten, Offline-Abrechnungsfähigkeiten und flussbasierten Abrechnungsfähigkeiten, bereitzustellen.

3. Kommunikationsnetzwerk (100) nach Anspruch 1 oder 2,
wobei die Zugangsdienstnetzwerk-Entität (102) angepasst ist, Abrechnungsfähigkeiten zum Abrechnen eines Dienstes, insbesondere eines Telekommunikationsdienstes oder eines Bereichswechseldienstes, der über das Kommunikationsnetzwerk (100) bereitgestellt wird, bereitzustellen.

4. Kommunikationsnetzwerk (100) nach einem der Ansprüche 1 bis 3,
wobei die Zugangsdienstnetzwerk-Entität (102) angepasst ist, einer Mobilstation, die kommunikativ an das Kommunikationsnetzwerk (100) gekoppelt ist, Abrechnungsfähigkeiten bereitzustellen.

5. Kommunikationsnetzwerk (100) nach einem der Ansprüche 1 bis 4,
wobei die Zugangsdienstnetzwerk-Entität (102) angepasst ist, der Entität für Authentifizierung, Autorisierung und Buchführung (106) Abrechnungsfähigkeiten durch Übertragen einer Annahmeanforderung an die Entität für Authentifizierung, Autorisierung und Buchführung (106) nach Eintritt einer Mobilstation in das Kommunikationsnetzwerk (100) bereitzustellen.

6. Kommunikationsnetzwerk (100) nach Anspruch 5,
wobei die Entität für Authentifizierung, Autorisierung und Buchführung (106) angepasst ist, eine Annahmeantwort an die Zugangsdienstnetzwerk-Entität (102) als Reaktion auf die Annahmeanforderung nach der Entscheidung, dass die Abrechnungsfähigkeiten zu aktivieren sind, zu übertragen.

7. Kommunikationsnetzwerk (100) nach einem der Ansprüche 1 bis 6,
wobei die Entität für Authentifizierung, Autorisierung und Buchführung (106) angepasst ist, basierend auf einem Profil eines Teilnehmers zu entscheiden, ob die Abrechnungsfähigkeiten zu aktivieren sind.

8. Kommunikationsnetzwerk (100) nach einem der Ansprüche 1 bis 7,
wobei die Zugangsdienstnetzwerk-Entität (102) angepasst ist, die Entscheidung der Entität für Richtlinien und Abrechnungsregeln (104) bei der Übertragung einer Angabe einer Einrichtung einer Kommunikationssitzung an die Entität für Richtlinien und Abrechnungsregeln (104) bereitzustellen.

9. Kommunikationsnetzwerk (100) nach einem der Ansprüche 1 bis 8,
wobei die Entität für Richtlinien und Abrechnungsregeln (104) angepasst ist, Abrechungsrichtlinien basierend auf der Entscheidung zu definieren.

10. Kommunikationsnetzwerk (100) nach Anspruch 9,
wobei die Entität für Richtlinien und Abrechnungsregeln (104) angepasst ist, eine Bestätigung der Einrichtung einer Sitzung an die Zugangsdienstnetzwerk-Entität (102) zu übertragen.

11. Kommunikationsnetzwerk (100) nach einem der Ansprüche 1 bis 10,
angepasst, gemäß IEEE 802.16 betriebsfähig zu sein.

12. Kommunikationsnetzwerk (100) nach einem der Ansprüche 1 bis 11,
angepasst als eines der Gruppe, bestehend aus einem Worldwide Interoperability for Microwave Access-Netzwerk und einem Long Term Evolution-Netzwerk.

13. Verfahren zum Kommunizieren in einem Kommunikationsnetzwerk (100), das Verfahren umfassend
Bereitstellen von einer Entität für Authentifizierung, Autorisierung und Buchführung (106), Fähigkeiten, insbesondere Abrechnungsfähigkeiten, von einer Zugangsdienstnetzwerk-Entität (102);
Entscheiden, durch die Entität für Authentifizierung, Autorisierung und Buchführung (106), ob die Fähigkeiten zu aktivieren sind, und Bereitstellen der Entscheidung der Zugangsdienstnetzwerk-Entität (102);
Bereitstellen der Entscheidung von der Zugangsdienstnetzwerk-Entität (102) der Entität für Richtlinien und Abrechnungsregeln (104).

14. Computerlesbares Medium, in dem ein Computerprogramm zum Kommunizieren in einem Kommunikationsnetzwerk (100) gespeichert ist, wobei das Computerprogramm, wenn es von einem Prozessor ausgeführt wird, angepasst ist, ein Verfahren nach Anspruch 13 auszuführen oder zu steuern.

15. Programmelement zum Kommunizieren in einem Kommunikationsnetzwerk (100), wobei das Programmelement, wenn es von einem Prozessor ausgeführt wird, angepasst ist, ein Verfahren nach Anspruch 13 auszuführen oder zu steuern.

## Revendications

1. Un réseau de communication (100), le réseau de communication (100) comprenant
une entité de réseau de services d'accès (102),
une entité de politique et de règles de facturation (104),
une entité d'authentification, d'autorisation et de comptabilité (106),
l'entité de réseau de services d'accès (102) étant adaptée de façon à fournir des capacités, plus particulièrement des capacités de facturation, à l'entité d'authentification, d'autorisation et de comptabilité (106),
l'entité d'authentification, d'autorisation et de comptabilité (106) étant adaptée de façon à décider si les capacités doivent être activées et à fournir la décision à l'entité de réseau de services d'accès (102),
l'entité de réseau de services d'accès (102) étant adaptée de façon à fournir la décision à l'entité de politique et de règles de facturation (104).

2. Le réseau de communication (100) selon la revendication 1,
dans lequel l'entité de réseau de services d'accès (102) est adaptée de façon à fournir des capacités du groupe se composant de capacités de facturation en ligne, de capacités de facturation hors ligne et de capacités de facturation basées sur le flux.

3. Le réseau de communication (100) selon la revendication 1 ou 2,
dans lequel l'entité de réseau de services d'accès (102) est adaptée de façon à fournir des capacités de facturation destinées à la facturation d'un service, plus particulièrement d'un service de télécommunication ou d'un service d'itinérance, fourni par l'intermédiaire du réseau de communication (100).

4. Le réseau de communication (100) selon l'une quelconque des revendications 1 à 3,
dans lequel l'entité de réseau de services d'accès (102) est adaptée de façon à fournir des capacités de facturation à une station mobile couplée en communication au réseau de communication (100).

5. Le réseau de communication (100) selon l'une quelconque des revendications 1 à 4,
dans lequel l'entité de réseau de services d'accès (102) est adaptée de façon à fournir des capacités de facturation à l'entité d'authentification, d'autorisation et de comptabilité (106) par la transmission d'une demande d'acceptation à l'entité d'authentification, d'autorisation et de comptabilité (106) après l'entrée d'une station mobile dans le réseau de communication (100).

6. Le réseau de communication (100) selon la revendication 5,
dans lequel l'entité d'authentification, d'autorisation et de comptabilité (106) est adaptée de façon à transmettre une réponse d'acceptation à l'entité de réseau de services d'accès (102) en réponse à la demande d'acceptation en cas de décision que les capacités de facturation doivent être activées.

7. Le réseau de communication (100) selon l'une quelconque des revendications 1 à 6,
dans lequel l'entité d'authentification, d'autorisation et de comptabilité (106) est adaptée de façon à décider si les capacités de facturation doivent être activées en fonction d'un profil d'un abonné.

8. Le réseau de communication (100) selon l'une quelconque des revendications 1 à 7,
dans lequel l'entité de réseau de services d'accès (102) est adaptée de façon à fournir la décision à l'entité de politique et de règles de facturation (104) lors de la transmission d'une indication d'établissement d'une session de communication à l'entité de politique et de règles de facturation (104).

9. Le réseau de communication (100) selon l'une quelconque des revendications 1 à 8,
dans lequel l'entité de politique et de règles de facturation (104) est adaptée de façon à définir une politique de facturation en fonction de la décision.

10. Le réseau de communication (100) selon la revendication 9,
dans lequel l'entité de politique et de règles de facturation (104) est adaptée de façon à transmettre un accusé de réception d'établissement d'une session à l'entité de réseau de services d'accès (102).

11. Le réseau de communication (100) selon l'une quelconque des revendications 1 à 10,
adapté de façon à être conçu conformément à IEEE 802.16.

12. Le réseau de communication (100) selon l'une quelconque des revendications 1 à 11,
adapté en tant que réseau du groupe se composant d'un réseau d'interopérabilité mondiale pour un accès hyperfréquence et d'un réseau d'évolution à long terme.

13. Un procédé de communication dans un réseau de communication (100), le procédé comprenant
la fourniture de capacités, plus particulièrement de capacités de facturation, d'une entité de réseau de services d'accès (102) à une entité d'authentification, d'autorisation et de comptabilité (106),
la décision, par l'entité d'authentification, d'autorisation et de comptabilité (106), si les capacités doivent être activées, et la fourniture de la décision à l'entité de réseau de services d'accès (102),
la fourniture de la décision de l'entité de réseau de services d'accès (102) à l'entité de politique et de règles de facturation (104).

14. Un support lisible par ordinateur, dans lequel un programme informatique de communication dans un réseau de communication (100) est conservé en mémoire, ledit programme informatique, lorsqu'il est exécuté par a processeur, étant adapté de façon à exécuter ou commander un procédé selon la revendication 13.

15. Un élément de programme de communication dans un réseau de communication (100), ledit élément de programme, lorsqu'il est exécuté par un processeur, étant adapté de façon à exécuter ou commander un procédé selon la revendication 13.
